# EUROPEAN PATENT APPLICATION

(11) **EP 2 061 225 A2**
(43) Date of publication of application: **20.05.2009**
(21) Application number: 09154133.4
(22) Date of filing: 27.04.2006
(51) Int. Cl.: H04M 15/28, H04M 17/00

(54) **Method and apparatus for monitoring and controlling wireless resource usage**

(62) Divisional of application: 06252276.8
(71) Applicant: Research In Motion Limited, Waterloo, Ontario N2L 3W8 (CA)
(72) Inventor: Rybak, Michal A., Waterloo Ontario N2L 3W8 (CA)
(74) Representative: Fennell, Gareth Charles

(57) **Abstract**

A mobile communications device (116) comprises a wireless resource usage module (216) operable to assist the user of the mobile communications device (116) and/or his or her employer in monitoring and/or controlling the level of resources consumed by the user in a billing period.

## Description

### TECHNICAL FIELD OF THE APPLICATION

The present disclosure generally relates to wireless packet data service networks, More particularly, and not by way of any limitation, the present disclosure is directed to a mobile communications device and related data service network employing features suitable for monitoring and controlling wireless service usage.

### BACKGROUND

Wireless service is generally offered by wireless service providers according to certain wireless service access plans. Most wireless service access plans include limitations as to the quantity of wireless access available in a given time. For example, a first wireless service access plan may provide for a certain number of cellular telephone voice minutes per month, Certain plans provide for unlimited cellular voice minutes during off-peak periods along with a limited number of minutes available during peak periods. Wireless service access plans may also provide for specified levels of wireless data access per month. While cellular telephone minutes are generally quantified in minutes per month, wireless data access is generally quantified in some units of bandwidth per month (e.g., megabytes per month). In either event, a wireless service provider will generally continue to provide service above the specified level, but will charge as additional premium for the usage above the level specified in the wireless service access plan.

### SUMMARY OF THE DISCLOSURE

In one embodiment, the present disclosure is directed to a method for monitoring resource usage of a mobile communications device comprising the steps of acquiring a mobile communication plan profile associated with a subscriber, the plan profile including at least a value representing a limit of mobile communication resource usage within a specified calendar period, acquiring resource consumption data relative to the specified calendar period; calculating usage statistics based on the resource consumption data and the plan profile; and presenting the usage statistics to an entity.

In another embodiment, the present disclosure is directed to a mobile communications device comprising at least one storage area for containing a mobile communication service plan profile associated with a subscriber, the mobile communication service plan profile including at least a value representing a limit of mobile communication resource usage within a specified period; at least one storage area for containing resource consumption data relative to the specified period; and a wireless resource usage control module for calculating usage statistics based on the resource consumption data and the service plan profile.

### BRIEF DESCRIPTION OF THE DRAWINGS

A more complete understanding of the embodiments of the present disclosure may be had by reference to the following Detailed Description when taken in conjunction with the accompanying drawings wherein:

Figure 1 depicts an exemplary network environment including a wireless packet data service network wherein an embodiment of the present disclosure May be practiced;

Figure 2 depicts a software architectural view of a mobile communications device operable to route incoming messages according to one embodiment;

Figure 3 depicts a block diagram of a mobile communications device operable to route incoming messages according to one embodiment;

Figure 4 depicts a flow chart for a method of monitoring and controlling wireless service access according to one embodiment; and

Figure 5 depicts a screen shot of a mobile communications device according to one embodiment;

Figure 6 depicts a screen shot of a mobile communications device according to a second embodiment;

Figure 7 depicts a screen shot of a mobile communications device having an embodiment of the usage monitoring application open;

Figure 8 depicts a screen shot of a usage monitoring application embodiment suitable for monitoring the wireless usage of a group of users; and

Figure 9 depicts a flow chart of a usage throttling method according to one embodiment.

### DETAILED DESCRIPTION OF THE DRAWINGS

A system and method of the present disclosure will now be described with reference to various examples of how the embodiments can best be made and used. Like reference numerals are used throughout the description and several views of the drawings to indicate like or corresponding parts, wherein the various elements are not necessarily drawn to scale.

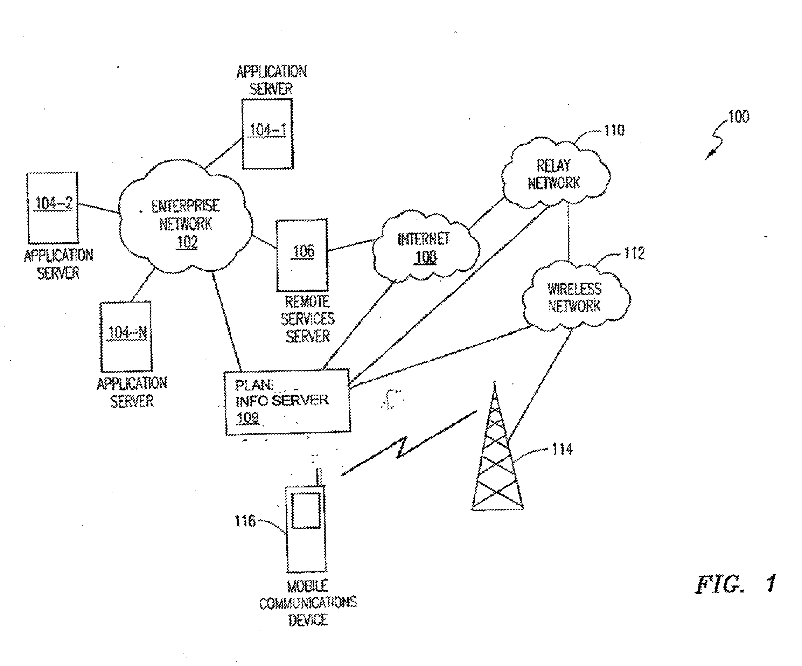

Referring now to the drawings, and more particularly to Figure 1, depicted therein is an exemplary network environment 100 including a wireless packet data service network 112 wherein an embodiment: of the present system may be practiced. An enterprise network 102, which may be a packet-switched network, can include one or more geographic sites and be organized as a local area network (LAN), wide area network (MAN) or metropolitan area network (MAN), et cetera, for serving a plurality of corporate users.

A number of application servers 104-1 through 104-N disposed as part of the enterprise network 102 are operable to provide or effectuate a host of internal and external services such as email, video mail, Internet access, corporate data access, messaging, calendaring and scheduling, information management, and the like. Accordingly, a diverse array of personal information appliances such as desktop computers, laptop computers, palmtop comp-aters, et cetera, although not specifically shown in Figure 1, may be operably networked to one or more of the application servers 104-i, i = , 2,...,N, with respect to the services supported in the enterprise network 102.

Additionally, a remote services server 106 may be interfaced with the enterprise network 102 for enabling a corporate user to access or effectuate any of the services from a remote location using a suitable mobile communications device 116, A secure communication link with end-to-end encryption may be established that is mediated through an external IP network, i.e., a public packet-switched network such as the Internet 108, as well as the wireless packet data service network 112 operable with mobile communications device 116 via suitable wireless network infrastructure that includes a base station (BS) 114

In one embodiment, a trusted relay network 110 may be disposed between the Internet 108 and the infrastructure of wireless packet data service network 112. By way of example, mobile communications device 116 may be a data-enabled handheld device capable of receiving and sending messages, web browsing, interfacing with corporate application servers, et cetera.

For purposes of the present disclosure, the wireless packet data service network 112 may be implemented in any known or heretofore unknown mobile communications technologies and network protocol. For instance, the wireless packet data service network 112 may be comprised of a General Packet Radio Service (GPRS) network that provides a packet radio access for mobile devices using the cellular infrastructure of a Global System for Mobile Communications (GSM)-based carrier network. In other implementations, the wireless packet data service network 112 may comprise an Enhanced Data Rates for GSM Evolution (EDGE) network, an Integrated Digital Enhanced Network (IDEN), a Code Division Multiple Access (CDMA) network, or any 3rd Generation (3G) network.

By way of providing an exemplary embodiment, the teachings of the present disclosure will be illustrated within the network environment 100, although those skilled in the are should readily recognize that the scope of the present disclosure is not limited thereby. Furthermore, a plan information server 109 may be coupled to any of the networks 102, 108, 110, 112 described above for purposes of the present disclosure as will be set forth below in greater detail.

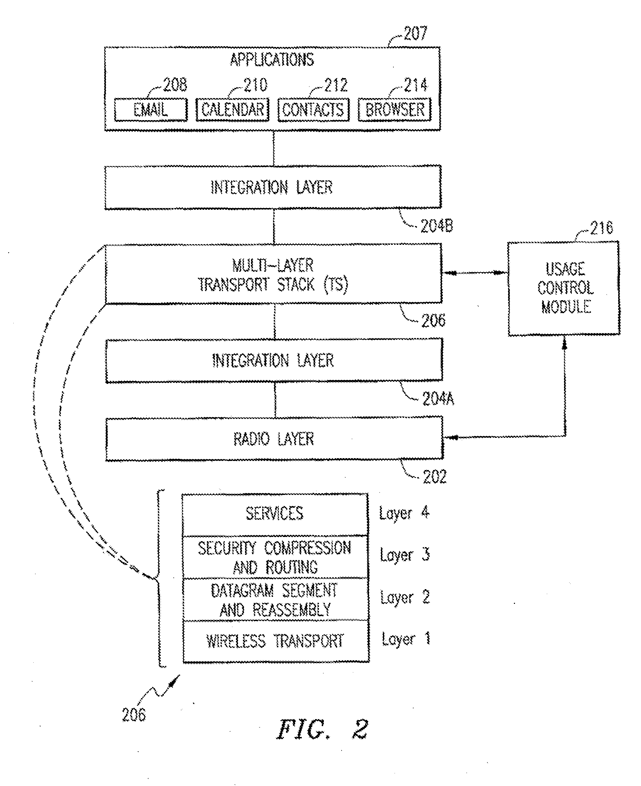

Figure 2 depicts a software architectural view of a mobile communications device according to one embodiment. A multi-layer transport stack (TS) 206 is operable to provide a generic data transport protocol for any type of corporate data, including email, via a reliable, secure and seamless convection to a wireless packet data service network,

As illustrated in the embodiment of Figure 2, an integration layer 204A is operable as an interface between a radio layer 202 and the transport stack 206 of mobile communications device 116, Likewise, another integration layer 204B is provided for interfacing between the transport stack 206 and a user applications layer 207 supported on the mobile communication device 116, e.g., email 208, calendar/scheduler 210, contract management 212 and browser 214. Although not specifically shown, the transport stack 206 may also be interfaced with the operating system of mobile communications device 116. In another implementation, the transport stack 206 May be provided as part of a data communications client module operable as a host-independent virtual machine on a mobile device. As seen in Figure 2, a usage control module 216 is coupled to radio layer 202 and transport stack 206. Usage control module 216 is operable to assist the user of mobile communications device 116 in controlling his or her usage of wireless services in a manner described more fully below.

The bottom layer (Layer 1) of the transport stack 206 is operable as an interface to the wireless network's packet layer. Layer 1 handles basic service coordination within the exemplary network environment 100 shown in Figure 1. For example, when a mobile communications device roams from one carrier network to another, Layer 1 verifies that the packets are relayed to the appropriate wireless network and that any packets that are pending from the previous network are rerouted to the current network. The top layer (Layer 4) exposes various application interfaces to the services supported on the mobile communications device. The remaining two layers of the transport stack 206, Layer 2 and Layer 3, are responsible for datagram segmentation/reassembly and security, compression and routing, respectively.

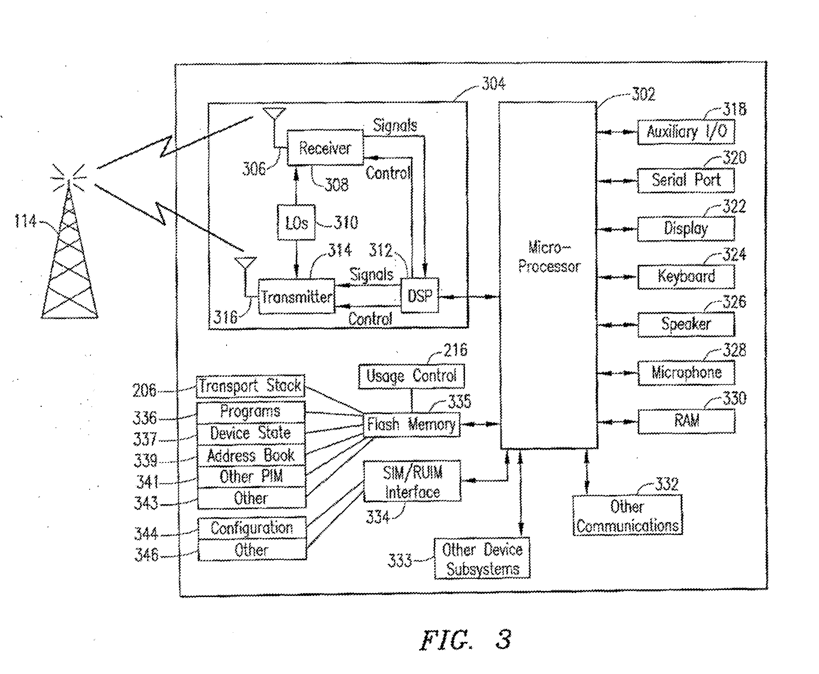

Figure 3 depicts a block diagram of a mobile communications device according to one embodiment. It will be recognized by those skilled in the art upon reference hereto that although an embodiment of mobile communications device 116 may comprise an arrangement similar to one shown in Figure 3, there can be a number of variations and modifications in hardware, software or firmware, with respect to the various modules depicted. Accordingly, the arrangement of Figure 3 should be taken as illustrative rather than limiting with respect to the embodiments of the present disclosure.

A microprocessor 302 providing for the overall control of an embodiment of mobile communications device 116 is operably coupled to a communication subsystem 304 which includes a receiver 308 and transmitter 314 as well as associated components such as one or more local oscillator (LO) modules 310 and a processing module such as a digital signal processor 312. As will be apparent to those skilled in the field of communications, the particular design of the communication module 304 may be dependent upon the communications network with which the mobile communications device 116 is intended to operate.

In one embodiment, the communication module 304 is operable with both voice and data communications Regardless of the particular design, however, signals received by antenna 306 through base station 114 are provided to receiver 308, which may perform such common receiver functions as signal amplification, frequency down conversion, filtering, channel selection, analog-to-digital (A/D) conversion, and the like. Similarly, signals to be transmitted are processed, including modulation and encoding, for example, by digital signal processor 312, and provided to transmitter 314 for digital-to-analog (D/A) conversion, frequency up conversion, filtering, amplification and transmission over the air-radio interface via antenna 316.

Microprocessor 302 also interfaces with further device subsystems such as auxiliary input/output (I/O) 318, serial port 320, display 322, keyboard 324, speaker 326, microphone 338, random access memory (RAM) 330, a sliort-rarge communications subsystem 332, and any other device subsystems generally labeled as reference numeral 333. To control access, a Subscriber Identity Module (SIM) or Removable User Identity Module (RUIM) interface 334 is alto provided in communication with the microprocessor 302.

In one implementation, SIM/RUIM interface 334 is operable with a SIM/RUIM card having a number of key configurations 344 and other information 346 such as identification and subscriber-related data. Operating system software and transport stack software may be embodied in a persistent storage module (i.e., non-volatile storage) such as Flash memory 335. In one implementation, Flash memory 335 may be segregated into different areas, e.g., storage area for computer programs 336 as well as data storage regions such as device state 337, address book 335, other personal information manager (PIM) data 341, and other data storage areas generally labeled as reference numeral 343. Usage control module 216 is operably connected to flash memory 335, including transport stack 206, as shown, In one exemplary implementation, the logic associated with the usage control module 216 is operable to access one or more storage areas, e.g., non-volatile storage areas 335, that contain various values relative to monitoring resource usage (i.e., resource consumption data) as will be set forth below, Additionally, the logic associated with the usage control module 216 is operable to access the subscriber's usage plan profile (e.g., a cellular telephone voice communication service plan profile, a wireless data transmission service plan profile, etc., which may be locally stored (e.g., in non-volatile areas), or downloaded, or otherwise available to the mobile communications device) for purposes of effectuating resource usage monitoring and/or throttling,

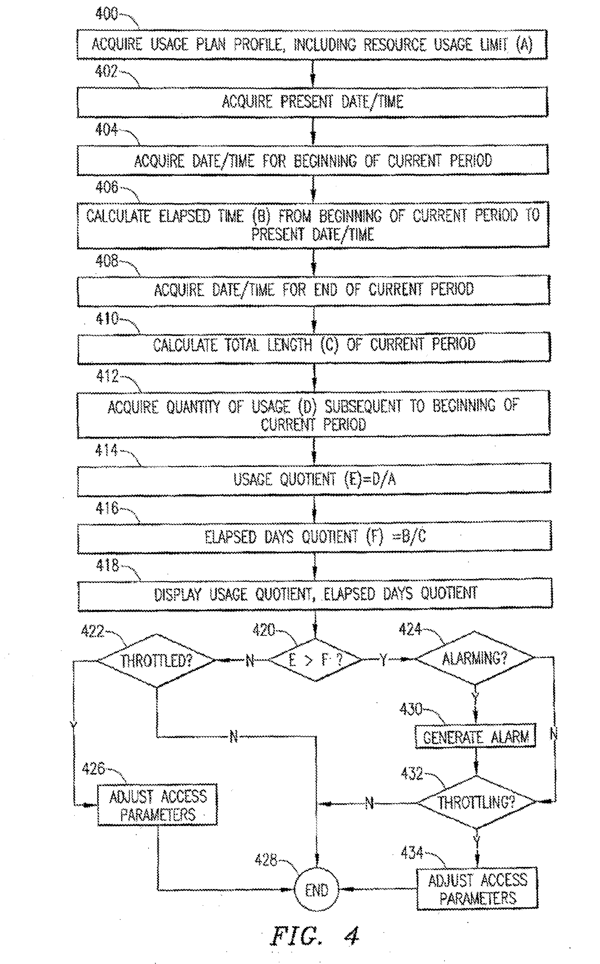

Figure 4 depicts a flow chart detailing the operation of usage control module 216 according to one embodiment. The process begins in block 400 with acquisition of the subscriber's usage plan profile, which includes at least one resource usage limit. Such limits may include, for example, limits as to the total number of on-peak cellular voice minutes per month, limits as to the total number of megabytes of data per month and/or limits as to the number of short messaging service (SMS) messages sent per month, as examples.

After the usage plan profile is acquired in block 400, the present date and time is acquired in block 402, along with the date and time of the beginning of the current billing period in block 404. Generally, the billing period will be one month and will begin at 12:00 am on a particular day of each month, but there is nothing within the spirit and scope of the present disclosure limiting the methods herein to such an arrangement. Given the date and time for the beginning of the current period and the current date and time, the usage control module 216 can determine the elapsed time since the beginning of the current billing period, as elaborated in block 406.

The date and time for the end of the current billing period is acquired in block 408. Given the data and time of the beginning of the current billing period and the date and time of the end of the current billing period, the usage control module 216 can calculate the total time of the current billing period, as elaborated in block 410.

The usage control module 216 acquires the quantity of current period usage of at least one limited wireless resource in block 412, This resource may be onpeak cellular voice minutes, megabytes of data or quantity of SMS messages, as examples. Given the total amount of the wireless resource available in the current billing period and the total amount of usage of that wireless resource so far in the current billing period, the usage control module 216 calculates, in block 414, a usage quotient representing the proportion of the resource which has already been consumed in the current billing period. For example, if the subscriber's service plan provides for 200 on peak minutes per month and the subscriber has used 100 minutes, the usage quotient would equal 100/200, or 50%.

In a similar manner, the usage control module 216 calculates, using the quantity of time elapsed in the current billing period and the total length of the current billing period, an elapsed days quotient representing the proportion of time in the current billing period which has already elapsed. For example, if the current month has 30 days, and 9 days have elapsed, the elapsed days quotient would equal 9/30, or 30%. This step is elaborated in block 416. The usage quotient and elapsed days quotient may be displayed to the user or provided to a management entity (block 418).

Process flow subsequent to block 418 is dependent on the relative values of the calculated statistics such as the usage quotient and the elapsed days quotient. If the proportion of the resource consumed in the current billing period is at or below the proportion of time elapsed in the current billing period, then the subscriber is unlikely to exceed the limit specified in the service plan and no corrective action is necessary, If, however, the proportion of the resource consumed in the current billing period exceeds the proportion of time elapsed so far in the current billing period, then the subscriber is consuming the limited resource at a rate making it likely that he or she will exceed the limit specified in the service plan, and corrective action may be necessary, as elaborated in detail below.

In decision block 420, usage control module 216 inquires as to whether the usage quotient (designated E) is greater than the elapsed days quotient (designated F). If the usage quotient is not greater than the elapsed days quotient, then there is not significant cause for alarm and process flow proceeds to decision block 422. If the usage quotient is greater than the elapsed days quotient, then there is cause for alarm and process flow proceeds to block 424.

In the event that the subscriber is on track to meet or undershoot his or her usage limit for the current billing period, and process flow has proceeded to decision block 422, the usage control module 216 determines whether the subscriber's wireless access is currently being "throttled" by the usage control module 216, In other words, usage control Module 216 determines whether prior conditions have placed usage control module 216 in a mode in which it is restricting the subscriber's access to wireless services. Such a restriction may include, for example, a reduced data transfer rate, or some limit as to the number of cellular voice minutes or SMS messages available per day or per hour.

If the subscriber's wireless access is not being throttled by usage control module 216, then process flow proceeds to block 428, wherein the current cycle of the wireless access control process comes to an end. If the subscriber's wireless access is, however, being throttled by usage control module 216 due to a previous overrun, then process flow proceeds to block 426, wherein usage control module 216 adjusts the wireless access parameters for mobile communications device 116.

In certain embodiments, adjustment of the throttled wireless access parameters may entail removal of a11 throttling of wireless access once the usage quotient equals or is less than the elapsed days quotient. In other embodiments adjustment of the wireless access parameters way entail a reduction in the degree of throttling proportional to the difference between the usage quotient and the elapse days quotient. In such an embodiment, so long as the usage quotient is only slightly lower than the elapsed days quotient, a certain level of throttling may continue to be imposed, with the goal of generating a "buffer" of wireless resources. In any event, after adjustment of the wireless access parameters, process flow proceeds to block 428, where the current cycle of the wireless access control process ends.

Returning to block 420, when the usage quotient exceeds the elapsed days quotient, reflecting the fact that the subscriber is consuming wireless resources at a rate expected to result in a budget overrun, process flow will proceed from block 420 to block 424, In block 424, usage control module 216 will determine whether the subscriber or some other party has activated an alarm function. The usage control module may have the capability to provide wireless usage overrun alarms to the subscriber and/or to other individuals or components in a network. If the alarm function is activated, process flow proceeds to block 430, wherein at least one alarm is generated to at least one individual or network component, and then to block 432. This alarm may be of any a number of types, including audio, video and tactile alarms. If the alarm function is deactivated, process flow proceeds directly to block 432.

In block 432, usage control module 216 determines whether the wireless resource throttling function has been activated, either by the subscriber or by some other individual or component. If the wireless resource throttling function has not been activated, process flow proceeds directly to block 428, where the current cycle of the wireless access control process ends. If the wireless resource throttling function has been activated, process flow proceeds to block 434.

In block 434, usage control module 216 adjusts wireless access parameters in order to control consumption of one or more wireless resources by the subscriber. As described above, in certain embodiments, the throttling may take the form of a pro-set usage limit imposed whenever throttling is deemed necessary. In other embodiments, the usage limit may vary within a range. The usage limit may vary, for example, according to the difference between the usage quotient and the elapsed days quotient. In such an arrangement, where the usage quotient of a wireless resource exceeds the elapsed days by 10%, the usage control module may reduce the maximum rate of consumption of the wireless resource by a proportional percentage, which could be 10%, 20% or 5%, as examples. In certain embodiments, the degree of throttling may be linearly proportional to the degree of projected overrun, while in others the degree of throttling may be geometrically proportional, so that minor overruns would have negligible effects on bandwidth, which would become increasingly dramatic as usage overruns increased. Any and all of the above are within the spirit and scope of the present disclosure. After the parameters are adjusted by the specific algorithm employed, process flow then proceeds from block 434 to block 428, where the current, cycle ends.

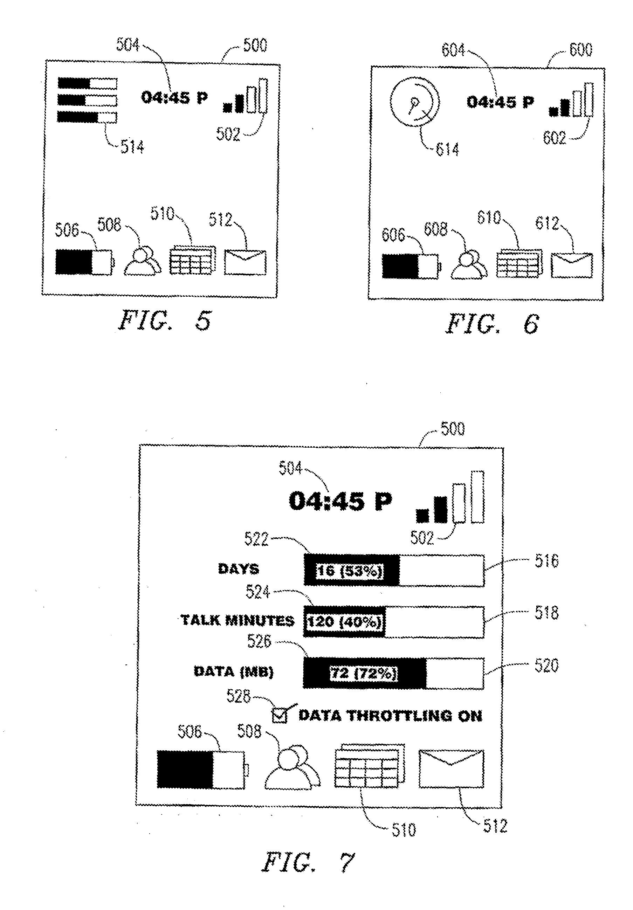

Figure 5 depicts one embodiment of a user interface screen 500 for a mobile communications device. For example, screen 500 displays information to the user of mobile communications device 116. Certain information, such as time readout 504, will generally be presented on screen 500 in textual format. In order to maximize special efficiency, however, other information is presented on screen 500 in a graphical format including a set of descriptive icons. Representative icons shown on screen 500 include a wireless signal strength icon 502, a battery strength icon 506, contacts icon 508, calendar icon 510, message icon 512 and wireless resource usage icon 514.

Each of icons 502, 506, 508, 510, 512, 514 has a specific function within mobile communications device 116, and each may generally be associated with a specific software application. Contacts icon 508, for example, may generally be associated with a software application such as contact management application 212 (shown in Figure 2), while calendar icon 510 and message icon 512 may be associated with calendar/scheduler application 210 and email application 208, respectively.

Wireless resource usage icon 514 is exemplified with three separate horizontal bars that may represent different parameters depending on the application. In one embodiment, one bar may represent the passage of time over the billing period, a second bar may represent peak cellular voice Minutes used in the current billing period and a third bar may represent data bandwidth used in the current billing period. By comparing the size of bars representing wireless resources usage to the size of bars representing the passage of time, a subscriber can monitor his or her rate of usage. In alternate embodiments, the bars may represent other parameters, which may include the number of off-peak cellular telephone voice minutes used and/or the number of SMS messages sent/received in the current billing period, as examples.

An alternative embodiment of a display screen is shown in Figure 6 and designated 600. Display screen 600 is similar to screen 500, having a signal strength meter icon 602, a current time display 604, a battery strength meter icon 606, a contacts icon 608, a calendar icon 610 and a message icon 612, each of which corresponds to a similar icon depicted in Figure 5. In contrast to display screen 500, display screen 600 has a rotary wireless resource usage icon 614 in place of the horizontal bar wireless resource usage icon 514 shown in Figure 5. In place of linear bars, wireless resource usage icon 614 employs rotary elements, including a needle pivoting about the center of the icon and a sector and marker disposed at the circumference thereof. Any of the elements may represent any of the parameters heretofore described.

Figure 7 depicts display screen 500 at a separate point in time at which an embodiment of the user interface application for usage control module 216 is open. An elapsed days graphical indicator 516 reflects the proportion of the current billing period elapsed as compared to the total span of the current billing period. Similarly, voice minutes graphical indicator 518 and data resources graphical indicator 520 reflect the proportion of each resource consumed as compared to the total amount of each resource available in the current billing period. Textual indicators 522, 524, 526 provide the same information as graphical resource indicators 516, 518, 520, but in alphanumeric rather than graphical format,

By comparing the state of resource indicators 518, 520, 524, 526 to elapsed days indicators 516, 522, a subscriber can quickly determine whether his or her rate of usage is likely to exceed the allotted resources for the current billing period. In order to assist the subscriber in controlling resource usage, a throttling indicator 528 reflects whether or not wireless bandwidth throttling is currently activated. In certain embodiments, throttling may be controlled by the subscriber, while in other embodiments throttling may be controlled partly or completely by a process external to mobile communications device 116 or by another individual.

Display screen 500 as shown in Figure 7 is only representative of one embodiment of the present disclosure. Alternative embodiments may incorporate additional information or less information. In certain embodiments, for example, the throttling indicator 528 may reflect a variable quantity representing the degree of throttling being imposed on wireless communications rather than functioning as a simple on/off indicator as shown in Figure 7. In certain other embodiments, an alarm control indicator may be included as part of the display. These and other variations are within the spirit and scope of the present disclosure.

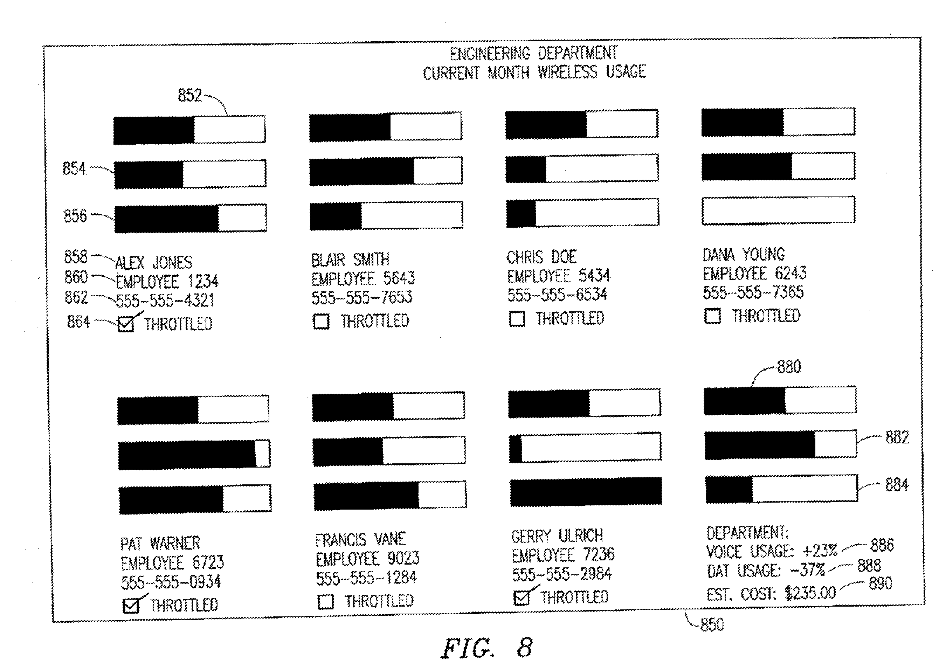

Figure 8 depicts a display screen 850 designed to assist enterprise managers in controlling wireless resource usage at the department level. A set of employees having mobile communications devices are displayed in tabular format. For a first employee, Alex Jones, a set of resource bars 852. 854, 856 are shown reflecting the level of Alex Jones' usage of certain wireless resources in the current billing period. The information for an employee also includes his or her name 858, employee number 860 and telephone number 862, The information also includes a throttling control indicator 864. In certain embodiments, throttling control indicator 864 may only reflect whether throttling is activated on the employee's mobile communications device, while in other embodiments it may control whether throttling is activated. While not specifically described for each person shown, the same information is presented for each of the seven individuals, as seen in Figure 8.

A department summary is included in the lower-right corner of Figure 6, which reflects the total resource usage for the department. This information is provided via graphical resource usage indicators 880, 882, 884 along with textual resource usage indicators 886, 888 and an estimated budget overrun amount 890. Given this information, a manager can budget, and in certain cases control, wireless resource usage within his or her department,

Corporate control of resource usage can be employed in a number of ways. In certain embodiments, a manager may be given the power to disallow resource usage above a certain limit, which may be expressed in minutes, megabytes or dollars, as examples. A manager may also be tasked with the option to allow unlimited usage through the admin tool. In certain embodiments, the management console may show data for one or more users spanning multiple billing periods Assuming a user is consistently over or under one or more of his or her allocated resource limits, the management console may highlight the user to the manager for possible plan alteration,

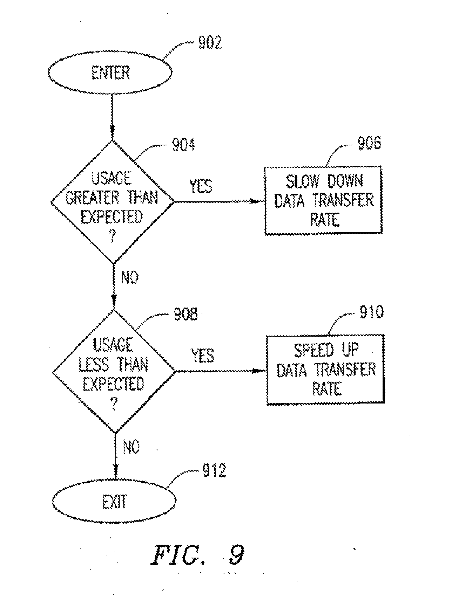

In embodiments employing some forum of usage throttling mechanism, the manner of usage throttling can vary depending on the application. One method of throttling is depicted in Figure 9. According to the embodiment of Figure 9, throttling is imposed when data usage is higher than expected, while a data boost may be provided when data usage is lower than expected,

Process flow begins in block 902 and proceeds from there to decision block 904. In decision block 904, a data usage control module, which may include logic or software instructions, determines whether data usage has been greater than expected. If usage is greater than expected, process flow is directed to block 906, where the data usage control module slows down the data transfer rate. If usage is not greater than expected, process flow is directed to decision block 908.

In decision block 908, data usage, control module determines whether usage is less than expected. If data usage is less than expected, process flow is directed to block 910, where the data usage control module speeds up the data transfer rate. If data usage is not less than expected, no throttling mechanism is imposed process flow is directed to block 912, where the process ends.

As those of skill in the art will appreciate, the present disclosure encompasses a wide variety of individual embodiments and applications within its broader teachings. For example, in certain embodiments, a mobile communications device may be operable to query for a period beginning and period end (or beginning and duration) and from this information measure the elapsed time by comparing the difference from the beginning to the current time on the device against the duration. Also, the device may be operable to measure consumption since the beginning of the billing period.

In an alternate embodiment, a server may supply the proportion between the resources used and resources available as well as between the time elapsed and rime available directly to the device, such that little or no computation is required on the device itself. In certain embodiments, a system may be operable to work with non-periodic "pay as you go" plans. Such a system may, for example, display a portion of used vs. total available resources since the last resource purchase, where the used indicator resets to 0 at the time of purchase. Alternatively, the system may display the remaining resources as a bulk quantity. The current available resources may be acquired from a server, or the system can maintain its own running total by adding up all the purchases and subtracting out the measured usage. In addition, such a "pay as you go" system may display the remaining number of days, projected based on the current consumption rate.

In certain applications, a combination of the above may be employed. Where, for example, a customer has purchased a monthly plan which provides for a certain level of resources while allowing for the pre-purchase of additional resources during the billing period, the elapsed time vs, time period display would remain, through the resource usage bars could actually go "backward" to reflect the additional resource capacity available after additional resources are purchased.

In certain embodiments, the resource usage bars may change in appearance if maximum resource usage is exceeded. According to one embodiment, the bar length is proportional to the usage percentage up until 100% of resource usage is reached. After 100% of available resource usage is exceeded, the bar length may then be proportional to the fraction of the planned 100% vs. the running total usage. In certain embodiments, the color or other appearance characteristic of the bars may change at this transition, Further, the device may be operable to display the current price or expense per unit time being incurred by usage of the resource.

The device may be operable to take into account any periods during which additional resource usage does not incur additional cost under the current billing plan. These may include, for example, nights and weekends. When the device is operating within an unlimited usage period, the usage indicator may be hidden or grayed out.

Billing plan details stored within the device or elsewhere may contain information about any number of overlapping conditional periods. The server may simply provide the current utilization ratios directly. Alternately, the server may provide static information about the plan, such as the starting and ending conditions for a given period, which may include the time of day or day of the week. From this information, the device could then determine the period within which it is operating and the quantity of resources consumed. Alternately, the device may calculate the ratios from durations and current consumption and elapsed time values provided by the server.

In certain embodiments, the device may be operable to display the level of resource utilisation incurred within a number of different periods without respect to the period within which the device is currently operating.

In certain embodiments, the device may roam to a network on which it does not have pro-allocated resources. In this situation, the device is in a similar situation to that in which all pre-paid resources have been consumed. In this situation, the device may be operable to begin displaying the immediate rate of resource usage in either resource terms or monetary terms.

It is believed that the operation and construction of the embodiments of the present disclosure will be apparent from the Detailed Description set forth above. While the exemplary embodiments shown and described may have been characterized as being preferred, it should be readily understood that various changes and Modifications could be made therein without departing from the scope of the present disclosure as set forth in the following claims.
Aspects and features of this disclosure are set out in the following numbered clauses which correspond to the claims of the parent application as filed.

### Clauses

1. A method for monitoring resource usage of a mobile communications device (116) comprising the steps of:
   acquiring (400) a mobile communication plan profile associated with a subscriber, the plan profile including at least a value representing a limit of mobile communication resource usage within a specified calendar period;
   acquiring (402, 404, 408, 412) resource consumption data relative to the specified calendar period;
   calculating (414, 416) usage statistics based on the resource consumption data and the plan profile; and
   presenting (418) the usage statistics to an entity.
2. The method of clause 1 wherein the specified calendar period is a month.
3. The method of clause 1 wherein at least a portion of the resource consumption data represents cellular telephone usage in minutes.
4. The method of clause 1 wherein at least a portion of the resource consumption data represents wireless data usage in megabytes.
5. The method, of clause 1 wherein the usage statistics are displayed to a user of the mobile communications device.
6. The method of clause 1 wherein an alert is generated depending on the usage statistics.
7. A mobile communications device (116) comprising:
   at least one storage area (335) for containing a mobile communication service plan profile associated with a subscriber, the mobile communication service plan profile including at least a value representing a limit of mobile communication resource usage within a specified period;
   at least one storage area (335) for containing resource consumption data to the specified period; and
   a wireless resource usage control module (216) for calculating usage statistics based on the resource consumption data and the service plan profile.
8. The mobile communications device (116) of clause 7 wherein at least a portion of the resource consumption data represents cellular telephone usage in minutes.
9. The mobile communications device (116) of clause 7 wherein at least a portion of the resource consumption data represents wireless data usage in megabytes.
10. The mobile communications device (116) of clause 7 wherein the wireless resource usage control module (216) is operable to throttle the amount of bandwidth provided depending on the usage statistics.
11. The mobile communications device (116) of clause 7 wherein the wireless resource usage control module (216) is operable to generate an alert depending on the usage statistics.

## Claims

1. A method for monitoring resource usage of a mobile communications device (116) comprising the steps of:
acquiring (400) a mobile communication plan profile associated with a subscriber, the plan profile including at least a value representing a limit of mobile communication resource usage within a specified calendar period;
acquiring (402, 404, 408, 412) resource consumption data relative to the specified calendar period;
calculating (414, 416) usage statistics based on the resource consumption data and the plan profile; and
dependent on the usage statistics indicating that the usage of the resource is greater than expected from the plan profile, reducing the data transfer rate of the mobile communications device for the resource, wherein the reduction of the data transfer rate is proportional to the amount of over-use of the resource.

2. The method of claim 1 wherein the specified calendar period is a month.

3. The method of claim 1 or claim 2, further comprising;
dependent on the usage statistics indicating that the usage of the resource is less than expected from the plan profile, increasing the data transfer rate of the mobile communications device for the resource.

4. A mobile communications device (116) comprising:
at least one storage area (335) for containing a mobile communication service plan profile associated with a subscriber, the mobile communication service plan profile including at least a value representing a limit of mobile communication resource usage within a specified period;
at least one storage area (335) for containing resource consumption data relative to the specified period; and
a wireless resource usage control module (216) for calculating usage statistics based on the resource consumption data and the service plan profile;
wherein the wireless resource usage control module (216) is operable to reduce the data transfer rate of the mobile communications device, dependent on the usage statistics indicating that the usage of the resource is greater than expected from the plan profile, wherein the reduction of the data transfer rate is proportional to the amount of over-use of the resource.

5. The mobile communications device of claim 4 wherein the specified calendar period is a month.

6. The mobile communications device of claim 4 or claim 5, wherein the wireless resource usage control module is operable to increase the data transfer rate, dependent on the usage statistics indicating that the usage of the resource is less than expected from the plan profile.
